# EUROPÄISCHE PATENTANMELDUNG

(11) **EP 2 063 511 A2**
(43) Veröffentlichungstag der Anmeldung: **27.05.2009**
(21) Anmeldenummer: 08015919.7
(22) Anmeldetag: 10.09.2008
(51) Int. Cl.: H02G 3/14

(54) **Elektrisches/elektronisches Installationsgerät**

(30) Priorität: 26.11.2007 DE 102007057200
(71) Anmelder: Berker GmbH & Co. KG, 58579 Schalksmühle (DE)
(72) Erfinder: Diegmann, Rolf-Dieter, 58579 Schalksmühle (DE); Knorr, Jens, 58791 Werdohl (DE)

(57) **Zusammenfassung**

Es wird ein elektrisches/elektronisches Installationsgerät der Gebäudesystemtechnik vorgeschlagen, mit einem die zur Funktion notwendigen Bauteile aufnehmenden Sockelteil, an dem zumindest ein Betätigungsglied verstellbar gelagert ist, wobei das Betätigungsglied aus einem Grundkörper und einem daran festgelegten Blendenteil besteht und wobei das Betätigungsglied zumindest mit einem Lichtleitelement versehen ist. Zu dem Zweck ein elektrisches/elektronisches Installationsgerät zu schaffen, dessen Betätigungsglieder sich besonders einfach und kostengünstig herstellen lassen und wobei das am Grundkörper befestigte Blendenteil sich bei Bedarf besonders einfach wieder vom Grundkörper demontieren lässt, ist das Lichtleitelement in einer Durchtrittsöffnung des Blendenteils festgelegt und greift mit seinem der Lichtaustrittsfläche abgewandten Endbereich haltend in eine Ausnehmung des Grundkörpers ein.

## Beschreibung

Die vorliegende Erfindung geht von einem gemäß Oberbegriff des Hauptanspruches konzipierten elektrischen/elektronischen Installationsgerät aus.

Derartige elektrische/elektronische Installationsgeräte sind oftmals als Schaltgeräte ausgeführt und in der Regel dafür vorgesehen, die Ein- und Ausschaltung eines Stromkreises bzw. die Umschaltung von einem auf einen anderen Stromkreis zu bewirken. Bei solchen elektrischen/elektronischen Installationsgeräten können die unterschiedlichsten Kontaktsysteme Verwendung finden. Die Betätigung solcher elektrischer/elektronischer Installationsgeräte kann z. B. durch das Verstellen eines z. B. als Taste, Drehknauf, Schieber, Wippe usw. ausgebildeten Betätigungsgliedes von einer Ausgangsposition in eine oder mehrere Funktionsstellungen erfolgen, wobei die Funktionsstellungen rastend und/oder tastend ausgeführt sein können. Oftmals sind solche elektrischen/elektronischen Installationsgeräte mit Leuchtmitteln ausgerüstet, damit entweder z. B. eine Funktionsanzeige und/oder eine Suchbeleuchtung über ein Lichtleitelement realisiert werden kann, bzw. realisiert werden können.

Ein dem Oberbegriff des Hauptanspruches entsprechendes elektrisches/elektronisches Installationsgerät ist durch die DE 196 40 548 C2 bekannt geworden. Dieses als Schaltgerät ausgebildete elektrische/elektronische Installationsgerät besteht im Wesentlichen aus einem die zur Funktion notwendigen Bauteile aufnehmenden Gehäuseteil, an dem zumindest ein Betätigungsglied verstellbar gelagert ist, wobei das Betätigungsglied aus einem Grundkörper und einem daran festgelegten, als Deckschicht ausgeführten Blendenteil besteht und wobei das Betätigungsglied zumindest mit einem Lichtleitelement versehen ist. Der Aufbau eines solchen Betätigungsgliedes ist jedoch vergleichsweise aufwendig, womit dieses in seiner Herstellung entsprechend teuer ist. Die Verbindung des Blendenteils mit dem Grundkörper ist nicht reversibel, so dass ein einmal mit dem Grundkörper verbundenes Blendenteil zu einem späteren Zeitpunkt nicht mehr ausgewechselt werden kann.

Der vorliegenden Erfindung liegt deshalb die Aufgabe zugrunde ein elektrisches/elektronisches Installationsgerät zu schaffen, dessen aus einem Grundkörper und daran festgelegten Blendenteil bestehende Betätigungsglieder sich besonders einfach und kostengünstig herstellen lassen, wobei das Blendenteil besonders einfach wieder lösbar am Grundkörper des Betätigungsgliedes sicher gehalten ist.

Diese Aufgabe wird durch die im kennzeichnenden Teil des Hauptanspruches angegebenen Merkmale gelöst. Bei einem solchermaßen ausgebildeten Betätigungsglied eines elektrischen/elektronischen Installationsgerätes ist besonders vorteilhaft, dass sich das Blendenteil bei Bedarf auf besonders einfache Art und Weise auch im Feld austauschen lässt und dass zur Befestigung ein Bauteil dient, welches als Lichtleitelement ausgebildet ist und sowieso zum Herstellungsumfang des elektrischen/elektronischen Installationsgerätes gehört, also kein zusätzlicher Aufwand erforderlich ist.

Weitere vorteilhafte Ausgestaltungen sind in den Unteransprüchen angegeben. Anhand eines in den Zeichnungen dargestellten Ausführungsbeispiels ist der erfindungsgemäße Gegenstand näher erläutert. Dabei zeigen:
- Fig.: 1: eine Explosionsdarstellung des elektrischen/elektronischen Installationsgerätes, in räumlicher Darstellung;
- Fig. 2:: eine Draufsicht eines elektrischen/elektronischen Installationsgerätes gemäß Figur 1;
- Fig. 3:: einen Vollschnitt des elektrischen/elektronischen Installationsgerätes gemäß Figur 2, entsprechend Linie A - A;
- Fig. 4:: einen Vollschnitt des elektrischen/elektronischen Installationsgerätes gemäß Figur 2, entsprechend Linie B - B, in vergrößerter Darstellung;
- Fig. 5:: einen Vollschnitt des elektrischen/elektronischen Installationsgerätes gemäß Figur 2, entsprechend Linie C - C, in vergrößerter Darstellung.

Wie aus den Figuren hervorgeht, besteht ein solches elektrisches/elektronisches Installationsgerät im Wesentlichen aus einem die zur Funktion notwendigen Bauteile aufnehmenden Sockelteil 1, an dem zumindest ein Betätigungsglied verstellbar gelagert ist, wobei das Betätigungsglied im Wesentlichen aus einem Grundkörper 2 und einem daran festgelegten Blendenteil 3 besteht und wobei das Betätigungsglied zumindest mit einem Lichtleitelement 4 versehen ist.

Wie des weiteren aus den Figuren hervorgeht, ist jedes Lichtleitelement 4 in einer Durchtrittsöffnung 5 eines Blendenteils 3 festgelegt und greift haltend mit seinem der Lichtaustrittsfläche 6 abgewandten Endbereich 7 in eine Ausnehmung 8 des Grundkörpers 2 ein.

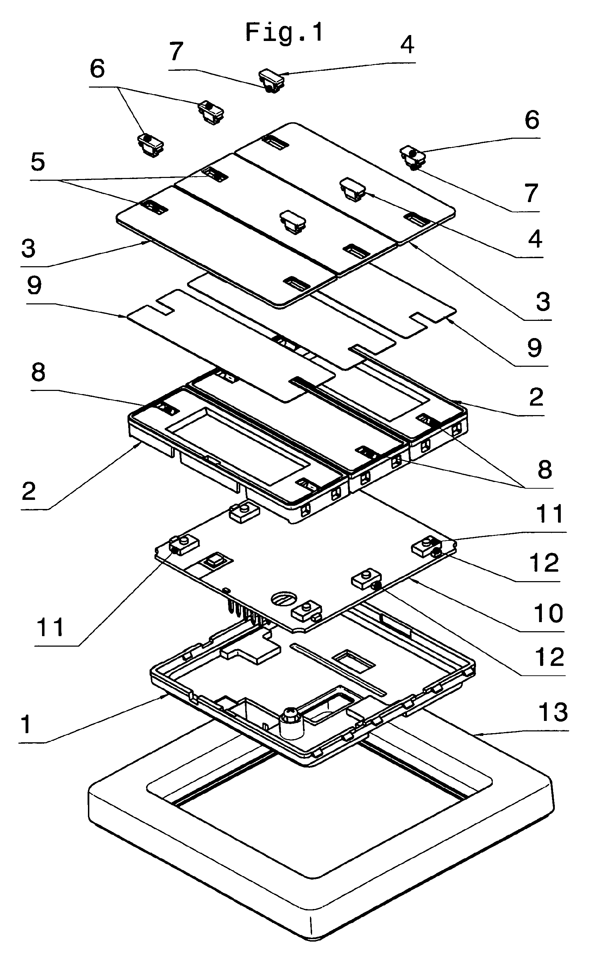

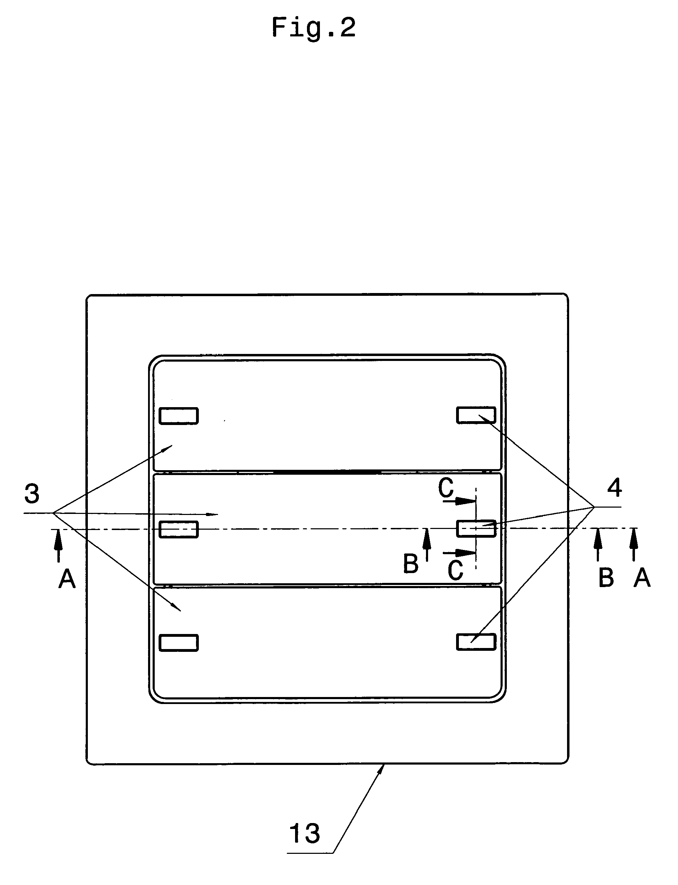

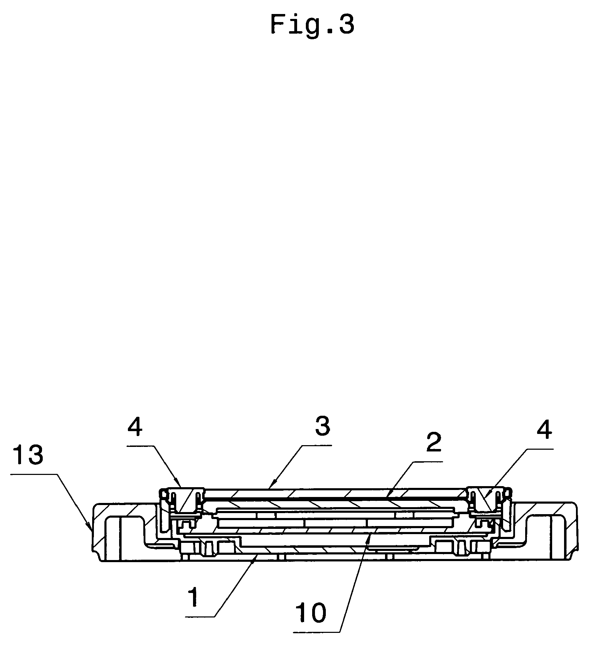

Wie insbesondere aus Figur 1, Figur 2 und Figur 3 hervorgeht, sind im vorliegenden Fall am Sockelteil 1 drei Betätigungsglieder verstellbar gelagert. Jedes Betätigungsglied weist zwei Lichtleitelemente 4 auf, die auch zur Befestigung des Blendenteils 3 am Grundkörper 2 vorgesehen sind. Zwischen dem Grundkörper 2 und den Blendenteil 3 ist im vorliegenden Fall eine Dekorfolie 9 angeordnet, weil die drei Blendenteile 3 aus einem transparentem Kunststoff bestehen und eine ansprechende, den Grundkörper 2 verdeckende Optik gewünscht ist. Die Dekorfolien 9 können selbstverständlich entfallen, wenn die drei Blendenteile 3 z. B. aus Metall, Holz, einem blickdichten Kunststoff usw. hergestellt sind. Im Sockelteil 1 ist eine Leiterplatte 10 gehalten, welche mit den zur Funktion notwendigen Bauteilen bestückt ist. Unter anderem sind sechs Schaltelemente 11 und sechs LEDs 12 vorgesehen. Zur formschönen Installation im Gebäude bzw. an einer Gebäudewand ist ein das elektrische/elektronische Installationsgerät haltend aufnehmender Abdeckrahmen 13 vorgesehen.

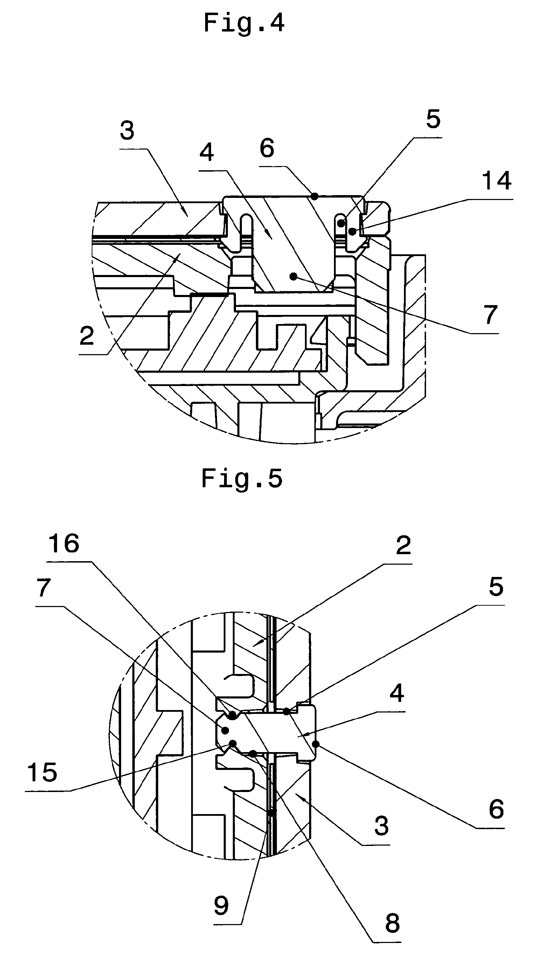

Wie insbesondere aus Figur 4 und Figur 5 hervorgeht, weist jedes Lichtleitelement 4 zwei Rastarme 14 auf, welche mit ihren Rasthaken hinter entsprechend ausgeführte Rastflächen des Blendenteils 3 greifen. Somit sind die Lichtleitelemente 4 sicher, formschlüssig in der zugehörigen Durchtrittsöffnung 5 des Blendenteils 3 festgelegt. Um wiederum das Blendenteil 3 wieder lösbar mit dem Grundkörper 2 verbinden zu können, ist in die Endbereiche 7 der Lichtleitelemente 4 jeweils eine Rastvertiefung 15 eingeformt, welche mit an die Ausnehmung 8 des Grundkörpers 2 angeformten Rastnocken 16 rastend in Verbindung kommen. Sowohl die Rastvertiefungen 15, als auch die Rastnocken 16 sind derart abgerundet ausgeführt, so dass eine sichere Halterung der Blendenteile 3 an ihren zugeordneten Grundkörpern 2 gewährleistet ist, jedoch gleichzeitig diese auf einfache Art und Weise bei Bedarf wieder vom Grundkörper 2 gelöst werden können.

Es ist somit ein elektrisches/elektronisches Installationsgerät realisiert, dessen im Wesentlichen jeweils aus einem Grundkörper 2 und einem daran festgelegten Blendenteil 3 bestehende Betätigungsglieder sich besonders einfach und kostengünstig herstellen lassen, wobei das Blendenteil 3 besonders einfach wieder lösbar am zugehörigen Grundkörper 2 des Betätigungsgliedes gehalten ist.

## Patentansprüche

1. Elektrisches/elektronisches Installationsgerät der Gebäudesystemtechnik mit einem die zur Funktion notwendigen Bauteile aufnehmenden Sockelteil, an dem zumindest ein Betätigungsglied verstellbar gelagert ist, wobei das Betätigungsglied aus einem Grundkörper und einem daran festgelegten Blendenteil besteht und wobei das Betätigungsglied zumindest mit einem Lichtleitelement versehen ist, **dadurch gekennzeichnet, dass** das Lichtleitelement (4) in einer Durchtrittsöffnung (5) des Blendenteils (3) festgelegt ist und mit seinem der Lichtaustrittsfläche (6) abgewandten Endbereich (7) haltend in eine Ausnehmung (8) des Grundkörpers (2) eingreift.

2. Elektrisches/elektronisches Installationsgerät nach Anspruch 1, **dadurch gekennzeichnet, dass** zumindest ein Lichtleitelement (4) in eine Durchtrittsöffnung (5) des Blendenteils (3) eingepresst ist.

3. Elektrisches/elektronisches Installationsgerät nach Anspruch 1 oder 2, **dadurch gekennzeichnet, dass** zumindest ein Lichtleitelement (4) in eine Durchtrittsöffnung (5) des Blendenteils (3) eingerastet ist.

4. Elektrisches/elektronisches Installationsgerät nach einem der Ansprüche 1 bis 3, **dadurch gekennzeichnet, dass** zumindest ein Lichtleitelement (4) durch eine stoffschlüssige Verbindung in einer Durchtrittsöffnung (5) des Blendenteils (3) festgelegt ist.

5. Elektrisches/elektronisches Installationsgerät nach einem der Ansprüche 1 bis 4, **dadurch gekennzeichnet, dass** der Endbereich (7) zumindest eines Lichtleitelementes (4) wieder lösbar rastend in eine Ausnehmung (8) des Grundkörpers (2) eingreift.

6. Elektrisches/elektronisches Installationsgerät nach einem der Ansprüche 1 bis 5, **dadurch gekennzeichnet, dass** der Endbereich (7) zumindest eines Lichtleitelementes (4) wieder lösbar kraftschlüssig in eine Ausnehmung (8) des Grundkörpers (2) eingreift.
